# FASCICULE DE BREVET EUROPEEN

(11) **EP 1 403 992 B1**
(45) Date de publication et mention de la délivrance du brevet: **09.01.2013**
(21) Numéro de dépôt: 03292369.0
(22) Date de dépôt: 26.09.2003
(51) Int. Cl.: H02G 3/38

(54) **Accessoire de repérage d'un profilé positionné à l'intérieur d'une cloison, et profilé comportant un tel accessoire**
Lokalisierungszubehör für ein Profilelement in einer Wand und damit ausgerüstetes Profilelement
Location accessory for a profile mounted in a wall and profile using the same

(30) Priorité: 27.09.2002 FR 0212001
(43) Date de publication de la demande: 31.03.2004
(73) Titulaire: Legrand France, 87000 Limoges (FR); Legrand SNC, 87000 Limoges (FR)
(72) Inventeur: Buard, Yvon, 53600 Voutre (FR); Mathieu, Tristan, 72140 SILLE LE GUILLAUME (FR)
(74) Mandataire: Stankoff, Hélène

(56) Documents cités:
- WO-A-01/31759
- US-A- 5 615 490

## Description

La présente invention concerne d'une manière générale l'encastrement d'une installation électrique dans des cloisons de séparation ou de doublage formant une isolation thermique et/ou phonique d'une paroi, ces cloisons comprenant essentiellement des plaques de plâtre collées ou non sur une âme cartonnée et fixées sur des rails verticaux et horizontaux de structure.

Classiquement, les rails horizontaux de telles cloisons sont posés alignés au sol et au plafond et reçoivent transversalement les rails verticaux intermédiaires.

Plus particulièrement, l'invention concerne un accessoire de repérage pour profilé de cheminement de câbles, de conducteurs ou de canalisations nécessaires à la desserte d'appareillages, en particulier d'appareillages électriques, ce profilé étant destiné à être positionné à l'intérieur d'une cloison comprenant au moins une plaque fixée sur des rails de structure.

Actuellement, on connaît notamment des documents WO 01/31759 et EP 1 207 605 un tel accessoire de repérage constitué par un élément magnétique ou métallique positionné dans le profilé circulant dans la cloison.

Un tel élément magnétique est repéré par l'électricien, après montage de la cloison, au moyen d'un élément magnétique complémentaire pour repérer le profilé encastré à l'intérieur de ladite cloison.

Toutefois, de tels éléments magnétiques ou métalliques sont relativement onéreux et ils nécessitent des aménagements du profilé creux pour être rapportés dans ceux-ci.

Afin de remédier aux inconvénients précités, l'invention propose un nouvel accessoire de montage simple et facile à mettre en oeuvre lors du positionnement du profilé de cheminement de câbles à l'intérieur de la cloison.

Cet accessoire de repérage est caractérisé en ce qu'il comprend un piétement apte à recevoir une extrémité dudit profilé, ce piétement portant sur au moins un côté une semelle destinée à se placer à l'extérieur dudit profilé et à dépasser de ladite plaque fixée sur lesdits rails de structure pour former un moyen de repérage de l'emplacement dudit profilé courant dans ladite cloison.

Selon d'autres caractéristiques non limitatives et avantageuses de l'accessoire de repérage selon l'invention sont les suivantes :
- ledit piétement est agencé de manière à se positionner à l'intérieur du rail de structure considéré, la semelle portée par le piétement se plaçant à l'extérieur dudit rail de structure ;
- le piétement est agencé de manière à pénétrer partiellement à l'intérieur du profilé ;
- le piétement est agencé de manière à entourer par l'extérieur ledit profilé ;
- ledit piétement comporte une embase sensiblement plane de forme rectangulaire qui porte, sur au moins un de ses grands côtés, ladite semelle ;
- ladite embase porte, sur chacun de ses grands côtés parallèles, une semelle.
- ladite embase présente une largeur légèrement inférieure à la largeur dudit rail de structure ;
- ladite embase comprend des lignes de prédécoupe délimitant des ouvertures à pratiquer par un installateur dans ladite embase ;
- chaque semelle s'étend sensiblement dans le plan de ladite embase, à partir d'un bord d'extrémité libre d'une paroi, qui s'élève perpendiculairement à ladite embase, et qui est repliée pour former un coude destiné à se placer à cheval sur une aile latérale longitudinale dudit rail de structure ;
- chaque paroi formant un coude est placée sur un bord longitudinal de l'embase ;
- chaque paroi formant un coude comporte une échancrure lui conférant une certaine élasticité ;
- ladite embase porte des parois, qui s'élèvent perpendiculairement à ladite embase, et qui définissent intérieurement un logement dont le fond est constitué par une partie de ladite embase ;
- ledit piétement comporte, sur au moins un petit côté de ladite embase, une oreille de préhension percée d'un trou apte à être traversé par un organe d'ancrage pour la fixation dudit piétement audit rail de structure ;
- ledit piétement comporte, sur chacun des deux petits côtés de ladite embase, une oreille de préhension percée d'un trou apte à être traversé par un organe d'ancrage pour la fixation dudit piétement audit rail de structure ;
- chaque semelle comporte, dans son bord libre longitudinal, au moins une échancrure indiquant à un installateur une ligne de perçage dudit profilé ; et
- l'accessoire de repérage est formé d'une seule pièce par moulage d'une matière plastique.

L'invention concerne également un profilé de cheminement de câbles, de conducteurs ou de canalisations nécessaires à la desserte d'appareillages, en particulier d'appareillages électriques, destiné à être positionné derrière une plaque d'une cloison comprenant des rails de structure sur lesquels est fixée ladite plaque, ledit profilé étant équipé d'un accessoire de repérage en vue de sa localisation dans la cloison depuis l'extérieur de celle-ci, caractérisé en ce qu'il comporte un accessoire de repérage tel que défini précédemment.

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est une vue schématique en perspective éclatée d'un profilé selon l'invention mis en place sur un rail de structure d'une cloison ;
- la figure 2 est une vue schématique assemblée de la figure 1 ;
- la figure 3 est une vue schématique en perspective d'une variante de réalisation du profilé représenté sur la figure 1 ;
- la figure 4 est une vue schématique en perspective d'une autre variante de réalisation du profilé selon l'invention ;
- la figure 5 est une vue schématique partielle en perspective d'une autre variante de réalisation du profilé selon l'invention ;
- la figure 6 est une vue de détail d'une variante de réalisation du profilé de la figure 5 ;
- les figures 7A et 7B sont des vues schématiques en perspective d'un accessoire de repérage pour le profilé de cheminement de câbles selon l'invention.

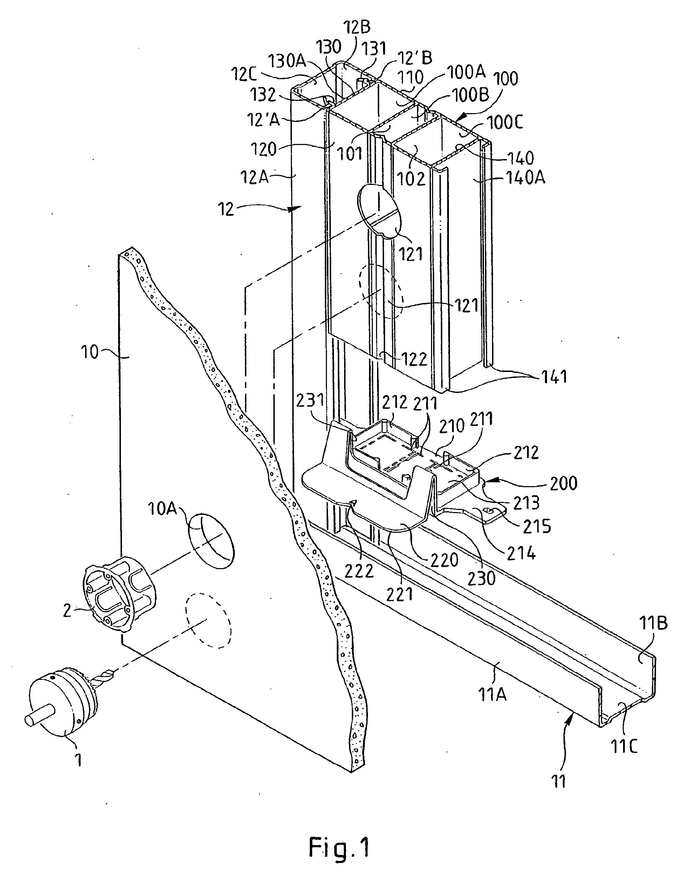

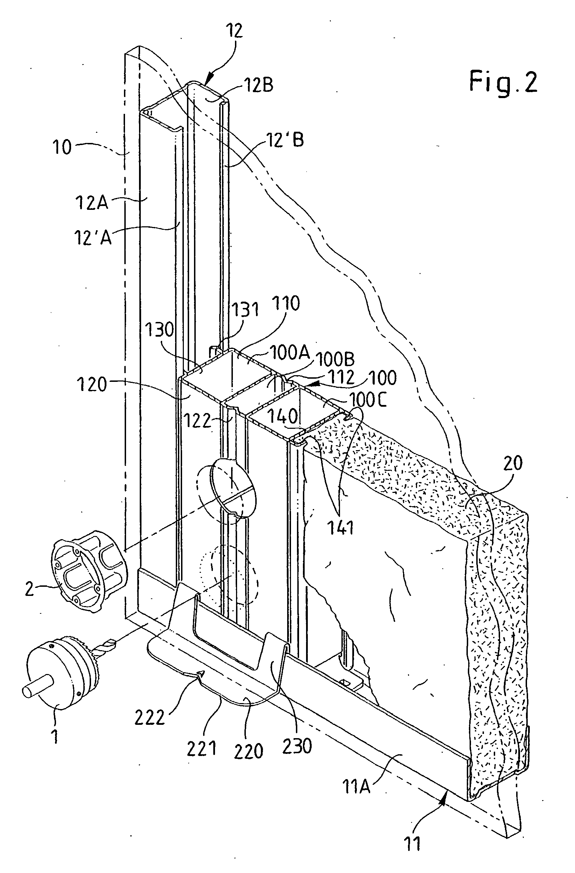

Sur les figures 1 et 2, on a représenté, partiellement, une cloison de séparation qui comporte une plaque avant 10 fixée sur des rails de structure verticaux 12 et horizontaux 11.

Cette cloison peut comporter deux plaques avant et arrière parallèles (la plaque arrière étant non représentée) fixées sur les rails de structure horizontaux 11 et verticaux 12.

Les rails de structure 11, 12 sont ici des profilés métalliques présentant une section transversale en U avec un fond 11C, 12C à partir duquel s'élèvent des ailes latérales longitudinales, 11A, 11 B, 12A, 12B parallèles.

Le rail de structure vertical 12 présente, au sommet de ses ailes latérales longitudinales 12A, 12B, des retours 12'A, 12'B dirigés l'un vers l'autre et bordant l'ouverture longitudinale dudit rail. Le rail de structure vertical 12 présente une extrémité engagée dans le rail de structure horizontal 11 pour rigidifier la structure porteuse des plaques de la cloison.

Un profilé 100 de cheminement de câbles ou de conducteurs nécessaires à la desserte d'appareillages électriques éventuellement positionnés à l'intérieur de celui-ci est positionné derrière la plaque avant 10 de la cloison.

Selon un premier mode de réalisation du profilé 100 représenté sur les figures 1, 2 et 3, il est constitué d'un tube creux fermé formé d'une seule pièce avec deux parois latérales longitudinales 130, 140 parallèles et deux parois avant 120 et arrière 110 parallèles. Le profilé 100 présente ici une section transversale rectangulaire.

Intérieurement, il comporte plusieurs compartiments 100A, 100B, 100C délimités par des cloisons longitudinales 101, 102 parallèles.

Ici, les deux compartiments 100A, 100C d'extrémité sont de même taille et sont séparés par un compartiment 100B central de plus petite taille.

Avantageusement, l'installateur peut faire courir, dans les différents compartiments 100A, 100B, 100C du profilé 100, différents types de câbles, comme par exemple des câbles de courant fort et des câbles de courant faible de sorte que ceux-ci sont séparés les uns des autres par type.

Le profilé 100 comprend des moyens de solidarisation 131, 132 pour être solidarisé à au moins un desdits rails de structure.

Selon l'exemple représenté, le profilé 100 est solidarisé au rail de structure vertical 12 de sorte que sa paroi avant 120 est placée derrière la plaque avant 10 de la cloison, parallèlement à celle-ci.

Avantageusement, selon l'invention, les moyens de solidarisation 131, 132 du profilé 100 sont des moyens d'encliquetage prévus le long d'une face externe longitudinale 130A dudit profilé 100 et aptes à coopérer par encliquetage avec le rail de structure vertical 12 de la cloison de sorte que le profilé 100 s'étend parallèlement à ce rail de structure vertical 12 principalement à l'extérieur de celui-ci.

Bien entendu, avec lesdits moyens de solidarisation, on pourrait prévoir également de solidariser le profilé 100 à un rail de structure horizontal.

Selon l'exemple représenté, le profilé 100 étant positionné verticalement, il présente une extrémité qui s'engage dans le rail de structure horizontal 11 qui peut être positionné sur le sol.

Comme le montrent les figures 1, 2 et 3, les moyens de solidarisation 131, 132 sont prévus en saillie de la face externe longitudinale 130A du profilé 100.

Bien entendu, selon une variante non représentée, on peut prévoir que ces moyens de solidarisation soient prévus en creux sur une ou plusieurs faces externes longitudinales dudit profilé.

ici, les moyens de solidarisation 131, 132 s'étendent en continu le long de ladite face externe longitudinale 130A du profilé 100. Ils sont prévus sur la face externe longitudinale 130A d'une des parois latérales longitudinales 130 du profilé.

Selon l'exemple représenté sur les figures 1 et 2, ces moyens de solidarisation 131, 132 sont constitués de deux languettes d'encliquetage, qui courent en continu en parallèle le long de ladite face externe longitudinale 130A de la paroi latérale longitudinale 130 correspondante du profilé 100, et qui comprennent chacune, à leur extrémité, des dents aptes à s'accrocher sous les retours 12'A, 12'B des ailes latérales longitudinales 12A, 12B du rail de structure vertical 12 de la cloison, en pénétrant à l'intérieur de ce dernier.

Le profilé 100 est réalisé par moulage ou par extrusion d'une matière plastique et les languettes d'encliquetage 131, 132, prévues en saillie de la face externe longitudinale 130A de sa paroi latérale longitudinale 130, viennent de formation avec ledit profilé 100.

Selon une caractéristique avantageuse du profilé 100 représenté sur les figures 1 et 2, l'autre paroi latérale longitudinale 140 du profilé 100 forme, à l'extérieur de celui-ci, un rail ouvert longitudinal dont le fond est constitué par la face externe longitudinale 140A de ladite paroi latérale longitudinale 140 du profilé 100. Ce rail ouvert longitudinalement est apte à recevoir la tranche d'un panneau 20 d'une garniture quelconque, ici une garniture d'isolation, à positionner à l'intérieur de ladite cloison ou un autre profilé du même type que le profilé 100 pour constituer par exemple un profilé dont les deux parois latérales longitudinales portent des moyens d'encliquetage sur des rails de structure.

En particulier, le rail ouvert longitudinalement est délimité par deux ailes latérales longitudinales 141 parallèles dont les retours viennent en prise avec le panneau de garniture 20.

Ainsi, avantageusement, le profilé 100 est solidarisé, d'un côté, par encliquetage au rail de structure vertical 12 de la cloison et, d'un autre côté, par engagement sur le panneau de garniture 20 engagé dans le rail de structure horizontal 11 de ladite cloison.

Le profilé 100 comporte, sur la face externe de ses parois avant 120 et arrière 110, un moyen de repère et de positionnement 122, 112 du foret d'un outil de perçage 1, ici une scie cloche, pour permettre de réaliser facilement une ouverture d'accès 121 à l'intérieur dudit profilé.

Ici, l'ouverture d'accès 121 réalisée au moyen de l'outil de perçage 1 permet d'accueillir un boîtier 2 de montage d'un appareillage électrique.

Ce moyen de repère et de positionnement est une rainure longitudinale 122, 112 en V formée dans la face externe de chaque paroi avant 120 et arrière 110 considérée.

Comme le montre la figure 1, l'ouverture d'accès 121 du profilé 100 est réalisée après que la cloison soit montée. L'installateur perce tout d'abord la plaque avant 10 de la cloison avec la scie cloche 1 et réalise une ouverture 10A pour atteindre la paroi avant 120 du profilé 100. Pour cela, il a besoin de repérer le profilé 100 à l'intérieur de la cloison. Ce repérage est réalisé à l'aide d'un accessoire de repérage 200 selon l'invention qui sera décrit ultérieurement.

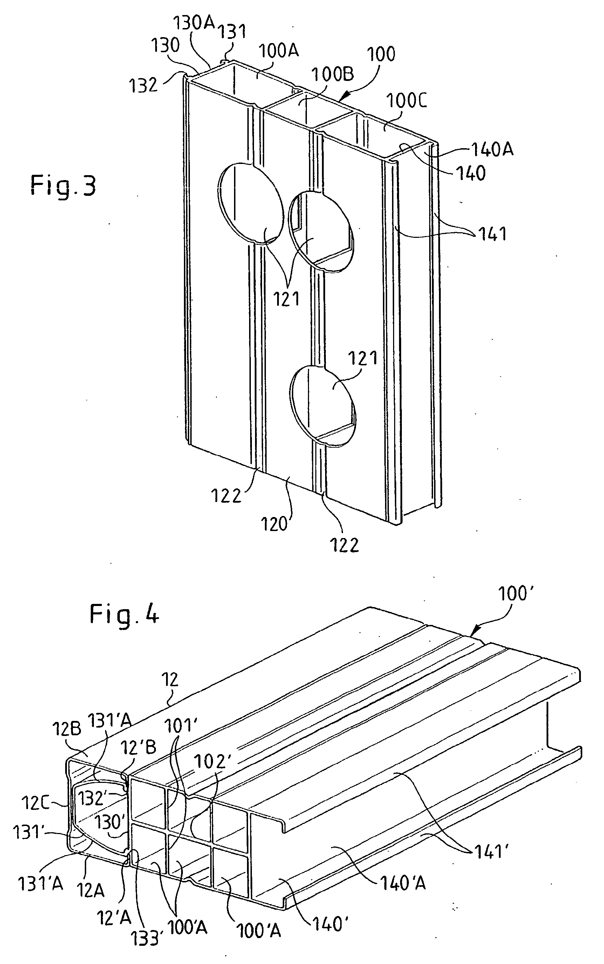

Comme le montre plus particulièrement la figure 3, selon une variante de réalisation, le profilé 100 peut présenter une plus grande largeur, et, dans ce cas, ses parois avant 120 et arrière 110 comportent une pluralité de rainures longitudinales 122 parallèles, de profil en V, formant une pluralité de moyens de repère et de positionnement d'un foret d'un outil de perçage pour réaliser, à différents endroits du profilé, des ouvertures d'accès 121 aux différents compartiments intérieurs 100A, 100B, 100C de celui-ci.

Sur les figures 4, 5 et 6, on a représenté d'autres variantes de réalisation du profilé selon l'invention.

Sur la figure 4, le profilé 100' est également un tube creux fermé compartimenté intérieurement par des cloisons 101', 102' en différents compartiments 100'A et présentant, sur la face externe longitudinale d'une de ses parois latérales longitudinales 130', des moyens de solidarisation à un rail de structure 12 d'une cloison.

Ici, les moyens de solidarisation comprennent une poutre longitudinale creuse 131' avec des parois 131'A déformables qui se raccordent chacune à ladite face externe longitudinale 130'A du profilé 100' en formant une gorge longitudinale 132', 133'.

La poutre longitudinale creuse 131' formant les moyens de solidarisation est apte à être introduite élastiquement à l'intérieur du rail de structure 12 par son ouverture longitudinale.

Lors de l'introduction de la poutre longitudinale creuse 131' à l'intérieur du rail de structure 12, les retours 12'A, 12'B, dirigés l'un vers l'autre et prévus à l'extrémité des ailes latérales longitudinales 12A, 12B dudit rail, s'engagent dans lesdites gorges longitudinales 132', 133' du profilé 100' pour que ce profilé 100' soit solidarisé au rail de structure 12.

L'autre paroi latérale longitudinale 140' du profilé 100' forme également, du côté extérieur, un rail ouvert dont le fond est constitué par la face externe longitudinale 140'A de ladite paroi latérale longitudinale 140'.

Ce rail ouvert est délimité latéralement par des parois latérales longitudinales 141' qui portent, sur leur bord libre, un retour.

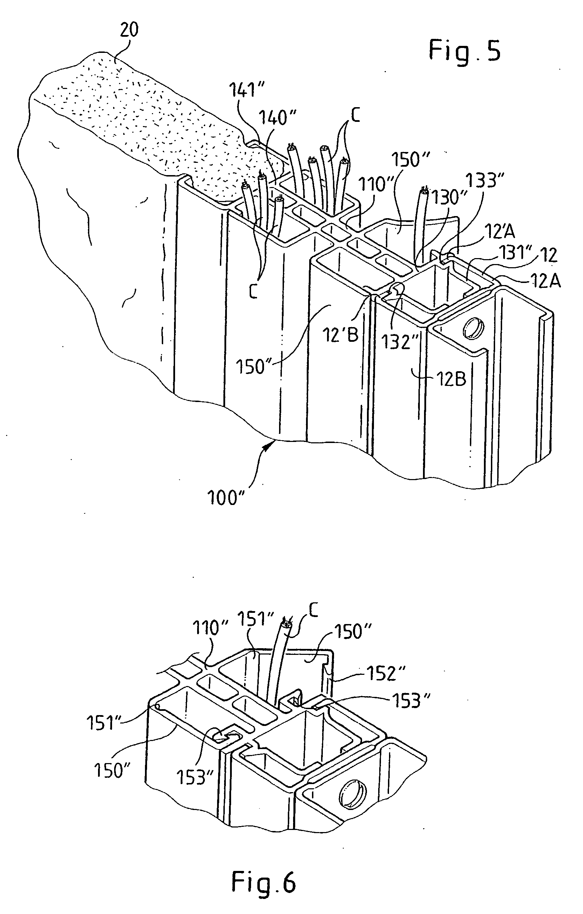

Sur les figures 5 et 6, on a représenté un profilé 100" ouvert, dont la face avant 150" est un couvercle de fermeture d'un socle comprenant un fond et des parois latérales longitudinales.

Ce couvercle de fermeture 150" peut être monté par encliquetage sur les parois latérales longitudinales du socle ou venir de formation avec ledit socle en constituant une paroi souple. Ce couvercle de fermeture 150" peut également être rigide en étant monté à pivotement sur une paroi latérale longitudinale du socle par l'intermédiaire d'une charnière 151" venue de formation avec le socle ou rapportée sur celui-ci.

Dans ce cas, comme le montre la figure 6, le couvercle de fermeture 150" est avantageusement destiné à venir se verrouiller sur le socle au moyen d'une coopération de dents d'encliquetage 152", 153".

Le profilé 100" comporte globalement plusieurs socles formant différents compartiments reliés à une structure centrale 110". Il présente, tout comme les profilés 100 et 100', deux parois latérales longitudinales 130" et 140" d'extrémité, l'une des parois latérales longitudinales comportant, sur sa face externe, des moyens de solidarisation 131" à un rail de structure vertical 12 d'une cloison à l'intérieur duquel le profilé 100" est positionné, et l'autre paroi latérale longitudinale 140" formant sur sa face externe un rail 141" destiné à accueillir un panneau 20 d'une garniture à positionner à l'intérieur de la cloison.

Les différents compartiments du profilé 100" peuvent accueillir différents types de câbles ou de conducteurs C, par exemple des câbles ou des conducteurs de courant fort et de courant faible.

Selon les exemples représentés sur les figures 5 et 6, les moyens de solidarisation 131" comprennent également une poutre à parois déformables raccordées à la face externe de la paroi latérale longitudinale 130" correspondante du profilé en formant des gorges longitudinales parallèles 132", 133" dans lesquelles sont destinés à s'engager des retours 12'A, 12'B des ailes latérales longitudinales du rail de structure vertical 12 lors de l'insertion de la poutre à l'intérieur de ce dernier.

Les profilés 100' et 100" sont également avantageusement réalisés d'une seule pièce en matière plastique moulée ou extrudée.

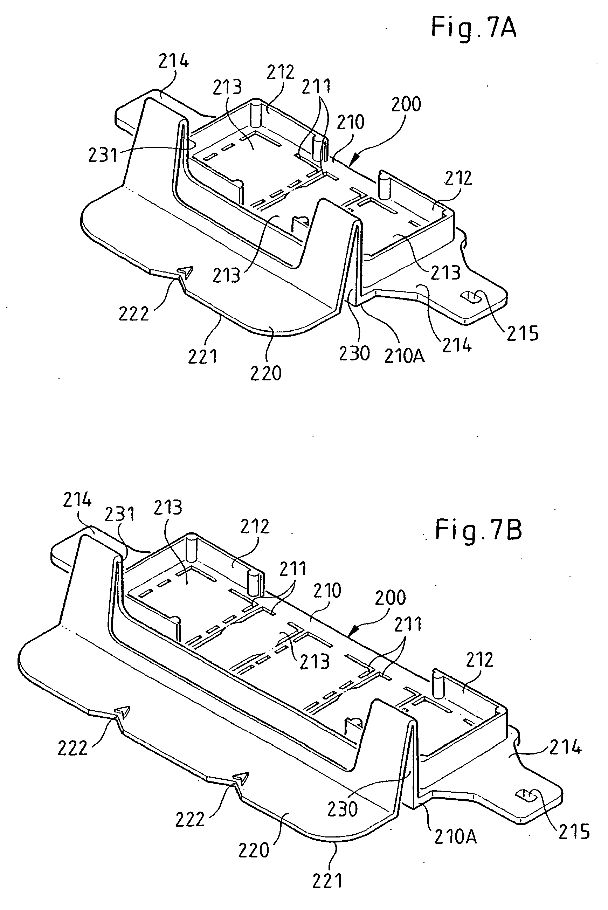

Sur les figures 7A et 7B, on a représenté un accessoire de repérage 200 pour un des profilés 100, 100', 100" de cheminement de câbles, de conducteurs ou de canalisations représentés sur les figures 1 à 6.

Sur les figures 1 et 2, l'accessoire de repérage 200 représenté sur la figure 7A est placé en position prêt à recevoir l'extrémité du profilé 100.

L'accessoire de repérage 200 de la figure 7B est spécialement adapté au profilé 100 représenté sur la figure 3.

L'accessoire de repérage 200 représenté sur les figures 7A et 7B comprend un piétement apte à recevoir une extrémité dudit profilé 100, ce piétement portant ici sur un côté une semelle 220 destinée à se placer à l'extérieur dudit profilé 100 et à dépasser de la plaque avant 10 de la cloison fixée sur les rails de structure 11, 12 pour former un moyen de repérage de l'emplacement dudit profilé 100 courant dans ladite cloison (voir figure 2).

Ici, comme le montrent plus particulièrement les figures 1 et 2, le piétement de l'accessoire de repérage 200 est agencé de manière à se positionner à l'intérieur du rail de structure considéré, ici le rail de structure horizontal 11, la semelle 220 portée par le piétement se plaçant à l'extérieur dudit rail de structure 11.

Le piétement comporte une embase 210 sensiblement plane de forme rectangulaire qui porte, sur un de ses grands côtés, ladite semelle 220.

Cette embase 210 présente une largeur légèrement inférieure à la largeur interne du rail de structure 11 accueillant l'accessoire, de façon à ce que l'accessoire de repérage 200 soit calé dans le rail.

Cette embase 210 porte des parois 212, qui s'élèvent perpendiculairement à ladite embase, et qui s'étendent sur une partie de son contour pour définir intérieurement un logement dont le fond est constitué par une partie de cette embase 210.

A ce propos, le fond du logement défini à l'intérieur des parois 212 comprend des lignes de prédécoupe 211 délimitant des ouvertures 213 à pratiquer par un installateur dans ladite embase. Ces ouvertures 213 peuvent permettre d'introduire dans le profilé, via son extrémité reçue par l'accessoire de repérage 200, des conducteurs provenant par exemple d'un faux plafond, d'un plancher technique ou d'un autre profilé positionné à l'intérieur ou à l'extérieur de la cloison.

Avantageusement, le fond du logement apporte une isolation des câbles contenus dans le profilé vis-à-vis du rail, et cette isolation est conservée lors de l'utilisation des ouvertures 213, en réalisant en correspondance des ouvertures de dimensions supérieures dans le rail.

Ici, le piétement est agencé de manière à pénétrer partiellement à l'intérieur du profilé 100.

Plus particulièrement, ce sont les parois 212, qui s'élèvent perpendiculairement à l'embase 210, qui s'engagent dans le profilé 100.

Les parois 212 introduites à l'intérieur du profilé 100 servent de butée de positionnement de l'accessoire de repérage 200 dans le profilé 100 et permettent de réaliser une certaine solidarisation de l'accessoire de repérage 200 au profilé 100.

Bien entendu, selon un autre mode de réalisation non représenté, on pourrait prévoir que le piétement de l'accessoire de repérage soit agencé de manière à entourer par l'extérieur ledit profilé. Cela serait possible par exemple en prévoyant de positionner les parois 212 portées par l'embase 210, de telle manière que celles-ci se placent à l'extérieur du profilé plutôt qu'à l'intérieur de celui-ci, comme cela est prévu sur les figures.

La semelle 220 s'étend sensiblement dans le plan de l'embase 210, à partir d'un bord d'extrémité libre d'une paroi 230, qui s'élève perpendiculairement à ladite embase 210, et qui est repliée pour former un coude destiné à se placer à cheval sur une aile latérale longitudinale 11A du rail de structure 11 considéré (voir figure 2).

De cette manière, l'accessoire de repérage 200 est solidarisé au rail de structure 11 dans lequel il est introduit et, du fait de la largeur de l'embase 210 qui est à peu près égale à la largeur interne du rail de structure 11, l'accessoire de repérage 200 est calé dans ledit rail.

Ladite paroi 230 formant le coude est placée sur un bord longitudinal 210A de l'embase 210 et comporte ici, avantageusement, une échancrure 231 lui conférant une certaine élasticité.

Par ailleurs, le piétement comporte, sur au moins un petit côté de l'embase 210, une oreille de préhension 214, qui s'étend dans le plan de l'embase 210, et qui est percée d'un trou 215 apte à être traversé par un organe d'ancrage (non représenté) pour la fixation dudit piétement audit rail de structure 11.

ici, selon les exemples de réalisation représentés, le piétement comporte, sur chacun des deux petits côtés de ladite embase 210, une oreille de préhension 214 percée d'un trou 215 apte à être traversé par un organe d'ancrage pour la fixation dudit piétement audit rail de structure.

En outre, comme le montrent les figures 1, 2, 7A et 7B, avantageusement, la semelle 220 comporte, dans son bord libre longitudinal 221, au moins une échancrure 222 qui se place à l'aplomb de la rainure longitudinale 122 en forme de V pratiquée dans la paroi avant 120 du profilé 100 lorsque ledit profilé est positionné sur le piétement de l'accessoire de repérage 200. Cette échancrure 222 permet ainsi d'indiquer à l'installateur, depuis l'extérieur de la cloison, où se trouve ladite rainure longitudinale en forme de V réalisée dans le profilé 100 et servant de moyens de repère et de positionnement d'un foret d'un outil de perçage du profilé. En d'autres termes, chaque échancrure 222 de la semelle 220 indique à l'installateur une ligne de perçage du profilé considéré.

Lorsque l'accessoire de repérage 200 présente une petite longueur comme celle représentée sur la figure 7A, la semelle 220 comporte, dans son bord libre longitudinal 221, une seule échancrure 222 destinée à se positionner à l'aplomb de la rainure longitudinale 122 en forme de V pratiquée dans la paroi avant 120 du profilé 100.

Par contre, lorsque l'accessoire de repérage 200 est destiné à recevoir un profilé de plus grande largeur, comme celui représenté sur la figure 3, qui comporte, dans sa paroi avant, deux rainures longitudinales 122 en forme de V parallèles, la semelle 220 de cet accessoire de repérage 200 comporte, dans son bord libre longitudinal 221, deux échancrures 222 destinées à se positionner chacune à l'aplomb d'une des rainures longitudinales 122 pratiquées dans la face externe de la paroi avant 120 du profilé 100 considéré.

L'accessoire de repérage 200 représenté sur les figures 7A et 7B est formé, avantageusement, d'une seule pièce par moulage d'une matière plastique. Il est avantageux que cette matière plastique soit colorée d'une couleur vive pour que la partie de la semelle 220, qui dépasse de la cloison une fois que l'ensemble est installé (voir figure 2), saute à l' oeil de l'installateur qui cherche à retrouver les profilés positionnés derrière la plaque avant 10 de la cloison montée.

Ainsi, le plaquiste peut facilement encliqueter des profilés 100, tels que représentés sur la figure 1, sur les rails de structure 12 considérés selon un plan donné et positionner en pied de chaque profilé un accessoire de repérage 200, comme représenté sur la figure 1, avant de monter la plaque avant 10 de la cloison.

Puis, l'installateur-électricien peut, à l'aide de chaque semelle 220 débordante de la plaque avant 10 de la cloison, facilement repérer chaque profilé 100 positionné dans la cloison pour le percer et y introduire les conducteurs, les câbles et éventuellement les appareillages électriques prévus.

Lorsque l'installation électrique est terminée, l'installateur n'a plus qu'à couper la semelle à ras de la cloison ou à laisser la semelle 220 telle que, celle-ci étant recouverte ultérieurement par la plinthe ou par le revêtement de sol.

En particulier, en ce qui concerne l'accessoire de repérage, on pourra prévoir que le piétement de cet accessoire porte, sur chacun de ses côtés longitudinaux parallèles, une semelle destinée à se placer à l'extérieur du profilé et à dépasser des plaques avant et arrière fixées sur les rails de structure d'une cloison de séparation.

Dans ce cas, les semelles peuvent être identiques et peuvent comporter chacune, dans leur bord libre longitudinal, des échancrures indiquant une ligne de perçage du profilé correspondant.

Chaque semelle est bien entendu rattachée à l'embase du piétement constituant l'accessoire de repérage par une paroi prévue sur un bord longitudinal de l'embase, qui s'élève perpendiculairement à cette dernière, et qui est repliée pour former un coude tout comme la paroi 230 représentée sur les figures 7A et 7B.

## Revendications

1. Accessoire de repérage (200) pour un profilé (100) de cheminement de câbles, de conducteurs ou de canalisations nécessaires à la desserte d'appareillages, en particulier d'appareillages électriques, ce profilé (100) étant destiné à être positionné à l'intérieur d'une cloison comprenant au moins une plaque (10) fixée sur des rails de structure (11, 12), **caractérisé en ce qu'**il comprend un piétement apte à recevoir une extrémité dudit profilé (100), ce piétement portant sur au moins un côté une semelle (220) destinée à se placer à l'extérieur dudit profilé (100) et à dépasser de ladite plaque (10) fixée sur lesdits rails de structure (11, 12) pour former un moyen de repérage de l'emplacement dudit profilé (100) courant dans ladite cloison.

2. Accessoire de repérage (200) selon la revendication 1, **caractérisé en ce que** ledit piétement est agencé de manière à se positionner à l'intérieur du rail de structure (11) considéré, la semelle (220) portée par le piétement se plaçant à l'extérieur dudit rail de structure (11).

3. Accessoire de repérage (200) selon l'une des revendications 1 ou 2, **caractérisé en ce que** le piétement est agencé de manière à pénétrer partiellement à l'intérieur du profilé.

4. Accessoire de repérage selon l'une des revendications 1 ou 2, **caractérisé en ce que** le piétement est agencé de manière à entourer par l'extérieur ledit profilé.

5. Accessoire de repérage (200) selon l'une des revendications 1 à 4, **caractérisé en ce que** ledit piétement comporte une embase (210) sensiblement plane de forme rectangulaire qui porte, sur au moins un de ses grands côtés, ladite semelle (220).

6. Accessoire de repérage (200) selon la revendication 5, **caractérisé en ce que** ladite embase porte, sur chacun de ses grands côtés parallèles, une semelle.

7. Accessoire de repérage (200) selon l'une des revendications 5 ou 6, **caractérisé en ce que** ladite embase (210) présente une largeur légèrement inférieure à la largeur dudit rail de structure.

8. Accessoire de repérage (200) selon l'une des revendications 5 à 7, **caractérisé en ce que** ladite embase (210) comprend des lignes de prédécoupe (211) délimitant des ouvertures (213) à pratiquer par un installateur dans ladite embase.

9. Accessoire de repérage (200) selon l'une des revendications 5 à 8, **caractérisé en ce que** chaque semelle (220) s'étend sensiblement dans le plan de ladite embase (210), à partir d'un bord d'extrémité libre d'une paroi (230), qui s'élève perpendiculairement à ladite embase (210), et qui est repliée pour former un coude destiné à se placer à cheval sur une aile latérale longitudinale (111) dudit rail de structure (11).

10. Accessoire de repérage (200) selon la revendication 9, **caractérisé en ce que** chaque paroi (230) formant un coude est placée sur un bord longitudinal (210A) de l'embase (210).

11. Accessoire de repérage (200) selon l'une des revendications 9 ou 10, **caractérisé en ce que** chaque paroi (230) formant un coude comporte une échancrure (231) lui conférant une certaine élasticité.

12. Accessoire de repérage (200) selon l'une des revendications 5 à 11, caractérisé en ce ladite embase (210) porte des parois (212), qui s'élèvent perpendiculairement à ladite embase (210), et qui définissent intérieurement un logement dont le fond est constitué par une partie de ladite embase (210).

13. Accessoire de repérage (200) selon l'une des revendications 5 à 12, **caractérisé en ce que** ledit piétement comporte, sur au moins un petit côté de ladite embase, une oreille de préhension (214) percée d'un trou (215) apte à être traversé par un organe d'ancrage pour la fixation dudit piétement audit rail de structure.

14. Accessoire de repérage (200) selon la revendication 13, **caractérisé en ce que** ledit piétement comporte, sur chacun des deux petits côtés de ladite embase, une oreille de préhension (214) percée d'un trou (215) apte à être traversé par un organe d'ancrage pour la fixation dudit piétement audit rail de structure.

15. Accessoire de repérage (200) selon l'une quelconque des revendications précédentes, **caractérisé en ce que** chaque semelle (220) comporte, dans son bord libre longitudinal, au moins une échancrure (222) indiquant à un installateur une ligne de perçage dudit profilé.

16. Accessoire de repérage selon l'une quelconque des revendications précédentes, **caractérisé en ce qu'**il est formé d'une seule pièce par moulage d'une matière plastique.

17. Profilé de cheminement de câbles, de conducteurs ou de canalisations nécessaires à la desserte d'appareillages, en particulier d'appareillages électriques, destiné à être positionné derrière une plaque d'une cloison comprenant des rails de structure sur lesquels est fixée ladite plaque, ledit profilé étant équipé d'un accessoire de repérage en vue de sa localisation dans la cloison depuis l'extérieur de celle-ci, **caractérisé en ce que** ledit accessoire de repérage est un accessoire selon l'une des revendications 1 à 16.

## Claims

1. Locating accessory (200) for a guide (100) for routing cables, wires or pipes required for supplying appliances, in particular electrical appliances, the guide (100) being provided to be positioned inside a partition comprising at least one board (10) fixed on structural rails (11, 12), **characterized in that** it comprises a base unit for receiving one end of said guide (100), the base unit bearing on at least one side a tab (220) provided to be placed outside said guide (100) and to extend beyond said board (10) fixed on said structural rails (11, 12) in order to provide a means of locating the position of said guide (100) running in said partition.

2. Locating accessory (200) according to claim 1, **characterized in that** said base unit is arranged such that it is positioned inside the structural rail (11) in question, the tab (220) borne by the base unit being placed outside said structural rail (11).

3. Locating accessory (200) according to any one of claims 1 or 2, **characterized in that** the base unit is arranged such that it partially extends inside the guide.

4. Locating accessory according to any one of claims 1 or 2, **characterized in that** the base unit is arranged such that it surrounds the outside of said guide.

5. Locating accessory (200) according to any one of claims 1 to 4, **characterized in that** said base unit comprises a substantially flat rectangular base plate (210) which bears said tab (220) on one of its long sides.

6. Locating accessory (200) according to claim 5, **characterized in that** said base plate bears a tab on each of its parallel long sides.

7. Locating accessory (200) according to one of claims 5 or 6, **characterized in that** the width of said base plate (210) is slightly smaller than the width of said structural rail.

8. Locating accessory (200) according to any one of claims 5 to 7, **characterized in that** said base plate (210) comprises pre-punched lines (211) delimiting knock-outs (213) in said base plate for use by an installer.

9. Locating accessory (200) according to any one of claims 5 to 8, **characterized in that** each tab (220) extends substantially in the plane of said base plate (210), from an outer edge of a wall (230), which rises perpendicular to said base plate (210), and is bent to form an elbow provided to straddle a longitudinal lateral web (111) of said structural rail (11).

10. Locating accessory (200) according to claim 9, **characterized in that** each wall (230) forming an elbow is placed on a longitudinal edge (210A) of the base plate (210).

11. Locating accessory (200) according to one of claims 9 or 10, **characterized in that** each wall (230) forming an elbow comprises an indentation (231) providing it with a degree of flexibility.

12. Locating accessory (200) according to any one of claims 5 to 11, **characterized in that** said base plate (210) bears walls (212) rising perpendicular to said base plate (210) and defining a recess within them, the base of which is constituted by a portion of said base plate (210).

13. Locating accessory (200) according to any one of claims 5 to 12, **characterized in that** said base unit comprises, on at least a short side of said base plate, a grip lug (214) having a through-hole (215) through which a fixing element can be passed for said base unit to be fastened to said structural rail.

14. Locating accessory (200) according to claim 13, **characterized in that** said base unit comprises, on each of the two short sides of said base plate, a grip lug (214) having a through-hole (215) through which a fixing element can be passed for said base unit to be fastened to said structural rail.

15. Locating accessory (200) according to any one of the previous claims, **characterized in that** each tab (220) comprises, on its longitudinal outer edge, at least one notch (222) showing an installer a drilling line of said guide.

16. Locating accessory according to any one of the previous claims, **characterized in that** it is formed in a single piece by moulding a plastic material.

17. Guide for routing cables, wires or wiring systems required for supplying appliances, in particular electrical appliances, provided to be positioned behind a board of a partition comprising structural rails onto which said board is fixed, said guide being equipped with a locating accessory for the purpose of locating it within the partition from the outside thereof, **characterized in that** said locating accessory is an accessory according to any one of claims 1 to 16.

## Patentansprüche

1. Lagemarkierungszubehör (200) für ein Profil (100) zum Führen von Kabeln, Leitern oder Stromschienen, die zur Versorgung von Installationsgeräten, insbesondere elektrischen Installationsgeräten erforderlich sind, wobei das Profil (100) dazu bestimmt ist, innen in einer Wand angeordnet zu sein, die wenigstens eine auf Tragschienen (11, 12) befestigte Platte (10) umfasst,
**dadurch gekennzeichnet, dass** es ein Fußgestell umfasst, das ein Ende des Profils (100) aufzunehmen vermag, wobei das Fußgestell wenigstens auf einer Seite mit einer Bodenplatte (220) versehen ist, die dazu bestimmt ist, außen an dem Profil (100) angeordnet zu sein und an der auf den Tragschienen (11, 12) befestigten Platte (10) vorzustehen, um ein Mittel zur Markierung der Lage des in der Wand verlaufenden Profils (100) zu bilden.

2. Lagemarkierungszubehör (200) nach Anspruch 1,
**dadurch gekennzeichnet, dass** das Fußgestell solchermaßen angeordnet ist, dass es innen in der betreffenden Tragschiene (11) platziert ist, wobei die von dem Fußgestell getragene Bodenplatte (220) außen an der Tragschiene (11) angeordnet ist.

3. Lagemarkierungszubehör (200) nach einem der Ansprüche 1 oder 2,
**dadurch gekennzeichnet, dass** das Fußgestell solchermaßen angeordnet ist, dass es teilweise in das Profil eingeführt ist.

4. Lagemarkierungszubehör nach einem der Ansprüche 1 oder 2,
**dadurch gekennzeichnet, dass** das Fußgestell solchermaßen angeordnet ist, dass es das Profil außen umgibt.

5. Lagemarkierungszubehör (200) nach einem der Ansprüche 1 bis 4,
**dadurch gekennzeichnet, dass** das Fußgestell einen im Wesentlichen ebenen, rechteckigen Sockel (210) umfasst, der auf wenigstens einer seiner Längsseiten mit der Bodenplatte (220) versehen ist.

6. Lagemarkierungszubehör (200) nach Anspruch 5,
**dadurch gekennzeichnet, dass** der Sockel auf jeder seiner zueinander parallelen Längsseiten mit einer Bodenplatte versehen ist.

7. Lagemarkierungszubehör (200) nach einem der Ansprüche 5 oder 6,
**dadurch gekennzeichnet, dass** der Sockel (210) eine Breite aufweist, die etwas geringer ist als die Breite der Tragschiene.

8. Lagemarkierungszubehör (200) nach einem der Ansprüche 5 bis 7,
**dadurch gekennzeichnet, dass** der Sockel (210) vorgestanzte Linien (211) aufweist, die Öffnungen (213) begrenzen, die in dem Sockel von einem Installateur ausgeführt werden können.

9. Lagemarkierungszubehör (200) nach einem der Ansprüche 5 bis 8,
**dadurch gekennzeichnet, dass** sich jede Bodenplatte (220) im Wesentlichen in der Ebene des Sockels (210) erstreckt, ausgehend von einem freien äußeren Rand einer Wand (230), die sich senkrecht zum Sockel (210) erhebt und zum Bilden einer Krümmung umgebogen ist, die dazu bestimmt ist, rittlings auf einem Seitenlängsschenkel (111) der Tragschiene (11) platziert zu werden.

10. Lagemarkierungszubehör (200) nach Anspruch 9,
**dadurch gekennzeichnet, dass** jede eine Krümmung bildende Wand (230) an einem Längsrand (210A) des Sockels (210) platziert ist.

11. Lagemarkierungszubehör (200) nach einem der Ansprüche 9 oder 10 **dadurch gekennzeichnet, dass** jede eine Krümmung bildende Wand (230) einen Einschnitt (231) aufweist, der ihr eine gewisse Elastizität verleiht.

12. Lagemarkierungszubehör (200) nach einem der Ansprüche 5 bis 11,
**dadurch gekennzeichnet, dass** der Sockel (210) mit Wänden (212) versehen ist, die sich senkrecht zum Sockel (210) erheben und innen eine Aufnahme bilden, deren Boden durch einen Teil des Sockels (210) gebildet ist.

13. Lagemarkierungszubehör (200) nach einem der Ansprüche 5 bis 12,
**dadurch gekennzeichnet, dass** das Fußgestell auf wenigstens einer Schmalseite des Sockels eine mit einem Loch (215) durchbohrte Grifflasche (214) umfasst, das zum Befestigen des Fußgestells an der Tragschiene von einem Verankerungsorgan durchquert zu werden vermag.

14. Lagemarkierungszubehör (200) nach Anspruch 13,
**dadurch gekennzeichnet, dass** das Fußgestell auf beiden Schmalseiten des Sockels eine mit einem Loch (215) durchbohrte Grifflasche (214) umfasst, das zum Befestigen des Fußgestells an der Tragschiene von einem Verankerungsorgan durchquert zu werden vermag.

15. Lagemarkierungszubehör (200) nach einem der vorhergehenden Ansprüche,
**dadurch gekennzeichnet, dass** jede Bodenplatte (220) an ihrem freien Längsrand wenigstens eine Einkerbung (222) aufweist, die einem Installateur eine Bohrungslinie des Profils anzeigt.

16. Lagemarkierungszubehör nach einem der vorhergehenden Ansprüche,
**dadurch gekennzeichnet, dass** es durch Formguss eines Kunststoffs einstückig ausgebildet ist.

17. Profil zum Führen von Kabeln, Leitern oder Stromschienen, die zur Versorgung von Installationsgeräten, insbesondere elektrischen Installationsgeräten erforderlich sind, das dazu bestimmt ist, hinter einer Platte einer Wand platziert zu sein, die Tragschienen umfasst, an denen die Platte befestigt ist, wobei das Profil mit einem Lagemarkierungszubehör ausgestattet ist, um es von außen in der Wand zu lokalisieren,
**dadurch gekennzeichnet, dass** das Lagemarkierungszubehör ein Zubehör nach einem der Ansprüche 1 bis 16 ist.
